# FASCICULE DE BREVET EUROPEEN

(11) **EP 3 276 187 B1**
(45) Date de publication et mention de la délivrance du brevet: **18.09.2019**
(21) Numéro de dépôt: 16181146.8
(22) Date de dépôt: 26.07.2016
(51) Int. Cl.: F16B 21/04, G04B 37/00, A44C 27/00, A44C 9/00

(54) **SOUS-ENSEMBLE D'HABILLAGE POUR PIECE D'HORLOGERIE OU MONTRE OU BIJOU**
UNTEREINHEIT ZUM ZUSAMMENSETZEN EINER UHR, ARMBANDUHR ODER EINES SCHMUCKSTÜCKS
CASING SUBASSEMBLY FOR A TIMEPIECE, WATCH OR JEWEL

(43) Date de publication de la demande: 31.01.2018
(73) Titulaire: Omega SA, 2502 Bienne (CH)
(72) Inventeur: Mollier, Adrien, 3274 Merzligen (CH); Knuchel, Daniel, 2502 Bienne (CH)
(74) Mandataire: Giraud, Eric

(56) Documents cités:
- CH-A- 456 468
- DE-B- 1 024 889
- DE-B- 1 089 332
- DE-U1-202006 012 410
- DE-U1-202008 013 898
- GB-A- 751 246

## Description

### Domaine de l'invention

L'invention concerne un sous-ensemble, dit d'habillage, pour pièce d'horlogerie ou pour montre ou pour bijou, comportant un premier composant comportant des rebords saillant d'une première jupe alternés avec des premiers dégagements, et un deuxième composant comportant des ailes saillant d'une deuxième jupe alternées avec des deuxièmes dégagements, agencé pour occuper une première position démontée d'insertion dans laquelle ledit premier composant et ledit deuxième composant ont l'un par rapport à l'autre une première orientation angulaire, ou pour occuper une position assemblée et verrouillée dans laquelle ledit premier composant et ledit deuxième composant ont l'un par rapport à l'autre une deuxième orientation angulaire différente de ladite première orientation angulaire et sont maintenus axialement par un ajustement à baïonnette entre au moins deux dits rebords et au moins deux dites ailes

L'invention concerne encore une pièce d'horlogerie, notamment une montre, comportant un tel sous-ensemble d'habillage.

L'invention concerne encore un bijou comportant un tel sous-ensemble.

L'invention concerne le domaine de l'habillage des montres, et le domaine de la bijouterie et de la joaillerie.

### Arrière-plan de l'invention

L'habillage des montres et appareils similaires obéit à de nombreuses contraintes, en particulier d'étanchéité, de robustesse, d'aspect, et doit être réalisé de façon à prévenir tout démontage involontaire se traduisant irrémédiablement par une intervention d'après-vente pour échange de joints, nettoyage, lubrification, voire réparation.

Certains composants d'habillage ou de commande doivent, encore, être indexés angulairement les uns par rapport aux autres, pour des repérages de position de référence d'origine, de repos, ou d'actionnement, ou encore pour faciliter la lecture d'indications ou de graduations, ou pour assurer la continuité de surfaces gauches et/ou de décors. Cet indexage angulaire est souvent délicat à bien réaliser, en combinaison avec un bon serrage des composants et avec une étanchéité parfaite des joints.

### Résumé de l'invention

L'invention se propose de réaliser un assemblage étanche et sécurisé de composants d'habillage avec un indexage angulaire facile à régler pour ajuster la position de façon précise.

A cet effet, l'invention concerne un sous-ensemble d'habillage selon la revendication 1.

L'invention concerne encore une pièce d'horlogerie comportant un tel sous-ensemble d'habillage.

L'invention concerne encore un bijou comportant un tel sous-ensemble.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, en perspective vue de dessus, une variante particulière d'un composant propre à l'invention, sous la forme d'un jonc comportant au moins une zone déformable élastique, ici en relief rentrant, ce jonc constituant un troisième composant agencé pour être inséré entre un premier composant et un deuxième composant agencés pour être fixés l'un à l'autre en mode baïonnette ;
- la figure 2 est une vue en plan, et de dessous, d'un jonc similaire, comportant une zone déformable élastique saillante
- la figure 3 représente, de façon schématisée, et en coupe passant par un axe principal, un sous-ensemble d'habillage selon l'invention, comportant un premier composant qui est une carrure, sous laquelle est représenté un deuxième composant qui est un fond, fixés l'un à l'autre en mode baïonnette et enserrant, d'une part un joint d'étanchéité, et d'autre part le jonc de la figure 1, ici logé dans une gorge du premier composant et arrêté angulairement dans un logement d'arrêt du deuxième composant, par lequel passe le plan de coupe ;
- la figure 4 représente, de façon similaire à la figure 3, le même sous-ensemble, dans un autre plan de coupe passant par la zone déformable élastique du jonc et un renflement de la gorge du premier composant, et entre les deux logements d'arrêt que comporte ici le deuxième composant ;
- la figure 5 représente, de façon similaire à la figure 4, et dans le même plan de coupe, une variante particulière où la gorge du premier composant est de révolution, et où ce premier composant comporte une goupille chassée, formant arrêt en position d'indexage de la zone déformable élastique du jonc ;
- la figure 6 est une section partielle, dans un plan perpendiculaire à l'axe principal, et au milieu de la gorge du premier composant, dans une autre variante où cette gorge comporte un crantage, et où le jonc comporte une succession de plusieurs zones déformables élastiquement.
- la figure 7 représente, de façon schématisée et en vue de dessous, une montre comportant un tel sous-ensemble dont une carrure constitue le premier composant, et un fond constitue le deuxième composant ;
- la figure 8 représente, de façon schématisée et en vue de dessus, une montre comportant un tel sous-ensemble dont une carrure constitue le premier composant, et une lunette constitue le deuxième composant ;
- la figure 9 représente, de façon schématisée et en vue de dessus, une montre comportant un tel sous-ensemble dont un tube fixé à une carrure constitue le premier composant, et une couronne constitue le deuxième composant.

### Description détaillée des modes de réalisation préférés

L'invention se propose de réaliser un assemblage étanche et sécurisé de composants d'habillage avec un indexage angulaire facile à régler, et ceci avec un coût réduit de composants.

L'invention concerne un sous-ensemble d'habillage 100 pour une pièce d'horlogerie, et plus particulièrement pour une montre, ou pour un bijou, comportant un premier composant 1 comportant des rebords 2 saillant d'une première jupe 6 alternés avec des premiers dégagements, et un deuxième composant 10 comportant des ailes 12 saillant d'une deuxième jupe 11 alternées avec des deuxièmes dégagements.

On utilise ici la dénomination générale sous-ensemble « d'habillage » aussi bien pour une pièce d'horlogerie que pour un bijou, même si ce terme est d'emploi courant en horlogerie seulement. On comprend que, dans le cas de la bijouterie, ce sous-ensemble peut concerner la structure du bijou, ou des éléments rapportés sur une structure de base, ou tout assemblage de plusieurs composants élémentaires ou pré-assemblés, voire le bijou tout entier.

Ce sous-ensemble d'habillage 100 est agencé pour passer d'une première position démontée d'insertion, à une deuxième position assemblée et verrouillée.

Dans la première position démontée d'insertion, le premier composant 1 et le deuxième composant 10 ont l'un par rapport à l'autre une première orientation angulaire.

Dans une variante particulière, non limitative, comportant des moyens de répulsion agencés au niveau de l'interface entre le premier composant 1 et le deuxième composant 10, ces derniers tendent à être maintenus à distance l'un de l'autre par des moyens de répulsion, lesquels comportent des moyens de répulsion magnétique et/ou au moins un élément élastique et/ou au moins un joint d'étanchéité 9. Le passage de la première position démontée d'insertion à la deuxième position assemblée et verrouillée est effectué sous l'action d'efforts exercés par un opérateur: un effort axial pour surmonter l'effort résistant des moyens de répulsion et mettre au contact le premier composant 1 et le deuxième composant 10, et un couple pour les amener dans une position d'indexation angulaire.

Dans la deuxième position assemblée et verrouillée, le premier composant 1 et le deuxième composant 10 ont l'un par rapport à l'autre une deuxième orientation angulaire différente de la première orientation angulaire. Dans la variante particulière comportant des moyens de répulsion, le premier composant 1 et le deuxième composant 10 sont maintenus axialement à l'encontre de l'effort résistant exercé par ces moyens de répulsion, par l'effet d'un ajustement à baïonnette, réalisé par l'application des efforts axiaux et de couple imprimés par l'opérateur, entre au moins deux rebords 2 et au moins deux ailes 12.

Cette solidarisation du premier composant 1 et du deuxième composant 10, par ajustement à baïonnette, notamment autour d'une direction axiale D, est réversible, et autorise leur démontage. De façon propre à l'invention et en rupture avec l'art antérieur, ce démontage nécessite de la part d'un opérateur des efforts similaires à ceux exercés lors de l'assemblage, ce démontage nécessite de préférence l'utilisation d'un outil spécial, coopérant par exemple avec des trous ou des encoches périphériques, ou similaire, et ne peut être consécutif à une maladresse ni à l'exposition à des facteurs physiques externes particuliers.

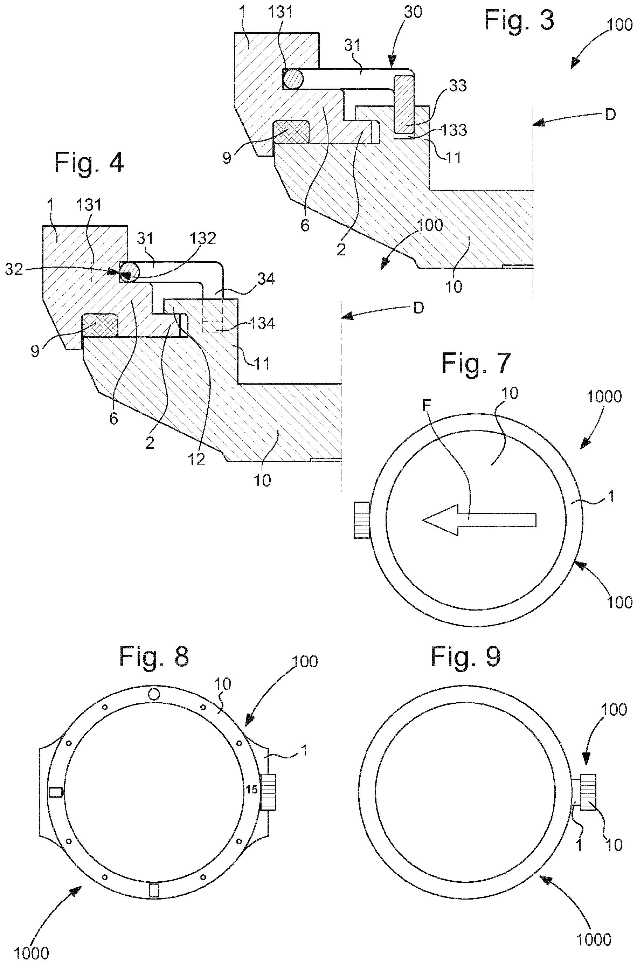

Dans une variante particulière comportant des moyens de répulsion et plus particulièrement, dans les variantes non limitatives illustrées par les figures 3 à 5, le sous-ensemble d'habillage 100 comporte au moins un joint d'étanchéité 9 entre un premier composant 1 et un deuxième composant 10. Dans ces mêmes variantes, le premier composant 1 comporte des rebords 2 saillant radialement vers l'intérieur d'une première jupe 6, qui sont alternés avec des premiers dégagements. Le deuxième composant 10 comporte des ailes 12 saillant radialement vers l'extérieur d'une deuxième jupe 11, qui sont alternées avec des deuxièmes dégagements. Le sous-ensemble d'habillage 100 est agencé pour passer d'une position démontée à une position assemblée en compression du joint d'étanchéité 9, par la solidarisation réversible du premier composant 1 et du deuxième composant 10, par un ajustement à baïonnette entre au moins deux rebords 2 et au moins deux ailes 12, dans un mouvement de rotation relatif autour d'une direction axiale D. Si la compression axiale du joint d'étanchéité 9 est la plus classique, l'invention permet aussi sans difficulté un assemblage avec compression radiale d'un tel joint. On comprend que l'invention est illustrée ici dans une variante particulière, avec des rebords et des ailes saillant radialement. L'invention est aussi applicable à d'autres variantes où les configurations axiale et radiale sont inversées.

Selon l'invention, ce sous-ensemble 100 comporte au moins un troisième composant 30 en forme de bague, qui est intercalé, notamment radialement dans les variantes illustrées, entre le premier composant 1 et le deuxième composant 10. Ce troisième composant 30 comporte plus particulièrement un jonc 31, c'est-à-dire une bague mince, non nécessairement fermée, qui est agencé pour être logé dans une gorge 131 que comporte au moins le premier composant 1 ou le deuxième composant 10. Plus particulièrement ce jonc 31 comporte des segments analogues à un rochet pour n'autoriser facilement qu'une manoeuvre unidirectionnelle, comme dans le cas particulier d'utilisation de l'invention pour une lunette unidirectionnelle. Un tel jonc peut être filiforme, de section sensiblement ronde, ou bien à section rectangulaire, ou autre.

Plus particulièrement, ce jonc 31 est élastique, il peut notamment être réalisé en fil à ressort, corde à piano, ou encore étampé, ou moulé, dans un matériau élastique, ou similaire.

Ce troisième composant 30 comporte au moins un arrêt en rotation 33, 34, par rapport au premier composant 1 ou au deuxième composant 10.

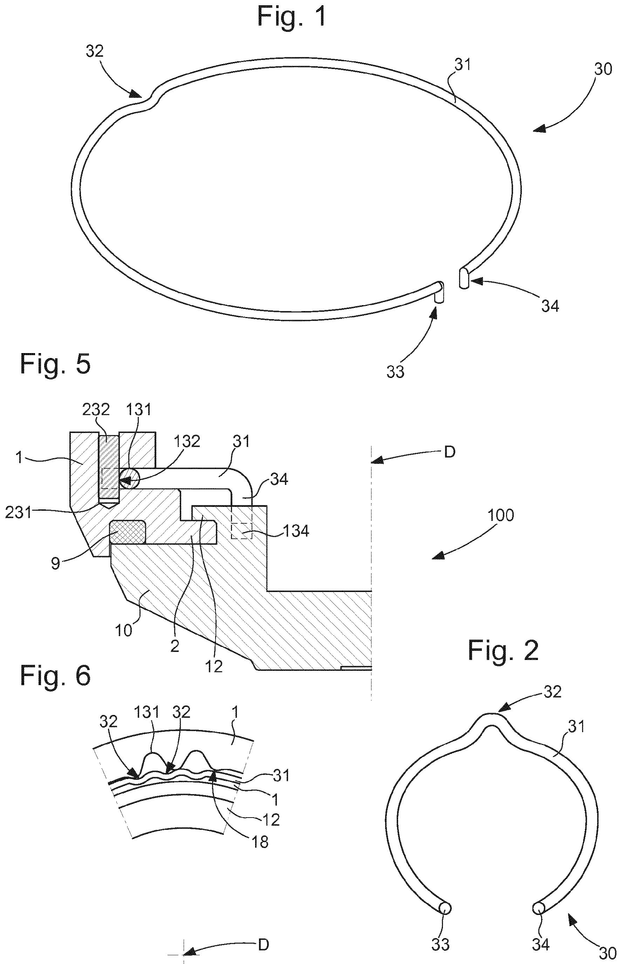

Le troisième composant 30 comporte encore au moins une zone élastique 32, qui est creuse radialement dans la variante de la figure 1, respectivement saillante radialement dans la variante de la figure 2, et qui est agencée pour coopérer, dans un plan passant dans la gorge, en indexation angulaire et en blocage avec un ergot 132, respectivement un logement, que comporte celui des premier composant 1 et deuxième composant 10 qui est libre en rotation par rapport au troisième composant 30. Cette zone élastique 32 est à relief radial dans les variantes illustrées où le mécanisme à baïonnette est basé sur des extensions radiales, elle peut être à relief axial dans une autre application de coopération par relief axial au niveau du mécanisme d'assemblage.

Dans une variante illustrée par la figure 5, cet ergot 132 est rapporté dans la gorge 131, qui est alors usinée de révolution par rapport à l'axe D. Plus particulièrement, cet ergot 132 est constitué par une goupille 232, ou similaire, qu'il suffit de chasser dans un simple perçage 231 réalisé dans le premier composant 1.

Dans ce cas où l'ergot 32 est un composant rapporté, si cette goupille est l'exécution la plus simple, elle n'exclut pas d'autres variantes, par exemple assemblées à queue d'aronde ou similaire. Dans une variante l'ergot 132 peut lui-même être élastique, et par exemple réalisé en métal amorphe, ou similaire.

Dans une autre variante, illustrée par les figures 3 et 4, la gorge 131 est réalisée par contournage, ou par injection, ou similaire, et comporte directement l'ergot 132, ou le logement dans une variante inverse.

Plus particulièrement, ce troisième composant 30 est fixe en rotation par rapport au premier composant 1 ou au deuxième composant 10, et la zone élastique 32 oppose un couple résistant de moment variable à tout couple tangentiel relatif entre le premier composant 1 et le deuxième composant 10.

Et tout passage d'un ergot 132, ou respectivement d'un logement, sur une zone élastique 32, génère un couple résistant qui tend à s'opposer au mouvement relatif de rotation entre le premier composant 1 et le deuxième composant 10.

Au moins une zone élastique 32 est agencée pour l'indexage angulaire relatif entre le premier composant 1 et le deuxième composant 10.

Plus particulièrement, le deuxième composant 10 dans la variante illustrée par les figures 3 à 5, comporte au moins un logement d'arrêt 133 ou 134 d'un pied, constituant un arrêt en rotation 33, 34, que comporte le troisième composant 30. Plus particulièrement, tel qu'illustré par les figures, le troisième composant 30 comporte deux arrêts en rotation 33 et 34, agencés pour coopérer avec deux logements d'arrêt 133 et 134 correspondants.

Ces pieds apportent une rigidité à l'ensemble.

La figure 1 illustre une variante où les deux arrêts en rotation 33 et 34 sont perpendiculaires au plan du jonc 31. Il est naturellement possible d'adopter d'autres formes, avec en particulier des arrêts radiaux dans le plan du jonc 31, ou autre.

Plus particulièrement, dans cette dernière variante, l'écartement entre les deux logements d'arrêt 133 et 134 peut être différent de l'écartement à l'état libre entre les arrêts en rotation 33 et 34, de façon à imprimer une contrainte au jonc 31: si le profil à l'état libre du jonc 31 est circulaire, hormis au niveau de la zone élastique 32, cette contrainte permet de lui donner une forme d'ellipse à l'état contraint, avec un frottement dans une partie de la gorge 131, de façon à freiner le premier composant 1 par rapport au deuxième composant 10 ce qui peut être utile, notamment lors du démontage pour maintenance.

Un résultat similaire peut être atteint avec une forme particulière du jonc 31 à l'état libre: ellipse, cercle comportant des ondulations, multilobé, ou autre.

Un traitement de surface appliqué au composant porteur de la gorge 131, et/ou au jonc 31, permet aussi de réaliser une surface de friction qui peut s'avérer utile pour s'opposer à un démontage inopiné: l'utilisateur doit alors se munir d'un outil, de préférence spécial, pour imprimer une rotation relative entre le premier et le deuxième composant, et franchir le seuil de résistance principal de la zone 32 qui se cumule avec un effort de friction résistant.

Plus particulièrement, tel que visible sur la figure 6, le troisième composant 30 comporte, sur au moins une zone déformable élastiquement, une pluralité de zones élastiques 32 agencées pour opposer une résistance successive à un relief complémentaire 18 que comporte le composant antagoniste, par exemple un crantage ou similaire, pouvant être composé d'une succession de logements.

Plus particulièrement encore, tel que visible aussi sur la figure 6, dans une même zone déformable élastiquement, les zones élastiques 32 successives sont agencées pour opposer une résistance croissante à un tel relief complémentaire 18. De façon particulière et avantageuse, une telle succession de zones élastiques 32 ou/et de reliefs complémentaires 18 peut être agencée pour opposer un couple résistant croissant lors du mouvement de rotation vers la position d'indexation imprimé par l'opérateur, par exemple avec une croissance des saillants, ou similaire.

Il est ainsi possible de réaliser un fort freinage progressif lors de la rotation relative entre le premier composant et le deuxième composant, avant d'arriver dans une position où l'ampleur du relief relatif entre le jonc 31 et l'ergot 132, ou bien le profil de la gorge 131 selon le cas, est tel que le couple résistant est à la valeur maximale, qui correspond à une position d'indexage particulière. De tels crantages permettent, aussi, de s'opposer à un démontage inopiné du sous-ensemble.

Naturellement une variante inverse, ou le premier composant 1 porte un logement d'arrêt 133 ou 134, et où le deuxième composant 10 comporte l'ergot 132 ou similaire, est aussi réalisable, et n'est pas décrit en détail, étant facile à transposer par l'homme du métier.

Plus particulièrement, et tel que visible sur les figures 1 et 2, le jonc 31 est ouvert, et comporte ainsi deux extrémités libres à l'état libre non assemblé de ce jonc. Cette particularité facilite notamment sa mise sous contrainte tel qu'exposé ci-dessus.

On notera que, quand un joint d'étanchéité n'est pas nécessaire, le troisième composant 30 peut constituer les moyens de répulsion, notamment sous la forme d'un jonc 31 non plan, mais comportant des ondulations, ou similaire.

Dans une application avantageuse, non limitative, visible sur la figure 7, le premier composant 1 est une carrure et le deuxième composant 10 est un fond. Dans une variante particulière, la présence d'au moins un joint d'étanchéité est requise. Dans une variante non illustrée, le premier composant 1 est un fond et le deuxième composant 10 est une pièce d'aspect, telle qu'un médaillon, ou similaire, rapportée sur ce fond, auquel cas un joint entre eux n'est pas nécessaire, et la présence d'un ressort, ou du jonc 31 lui-même, pouvant parfaitement suffire dans une variante comportant des moyens de répulsion.

On note, à ce propos, que l'invention peut être mise en oeuvre sans de tels moyens de répulsion, notamment pour des applications d'habillage ou similaire.

Dans une autre application, le premier composant 1 est une carrure et le deuxième composant 10 est un réhaut ou une lunette, tel que visible sur la figure 8. Ce cas convient bien à une variante dans laquelle un premier composant et un deuxième composant tendent à être éloignés l'un de l'autre, par répulsion magnétique ou encore par un élément élastique tel qu'un jonc, c'est-à-dire une bague mince, non nécessairement fermée, ou plus particulièrement un jonc comportant des segments analogues à un rochet pour n'autoriser facilement qu'une manoeuvre unidirectionnelle, comme dans le cas particulier d'utilisation de l'invention pour une lunette unidirectionnelle. Un tel jonc peut être filiforme, de section sensiblement ronde, ou bien à section rectangulaire, ou autre. Ou encore, dans une variante particulière, c'est tout simplement le troisième composant 30 lui-même qui constitue alors les moyens de répulsion, ce qui réduit sensiblement le nombre de composants tout en assurant très bien le maintien requis. Dans ce cas le jonc 31 peut comporter à la fois un relief dans son plan principal pour l'indexage entre le premier composant 1 et le deuxième composant 10, et un autre relief selon la direction axiale du sous-ensemble 100, pour constituer de tels moyens de répulsion.

Dans une autre application encore, le premier composant 1 est une carrure ou un tube rapporté sur une carrure, et le deuxième composant 10 est une couronne, tel que visible sur la figure 9. Dans une variante, le deuxième composant 10 est une tige de couronne ou un poussoir. Dans ces cas de figure aussi, la présence d'au moins un joint d'étanchéité est obligatoire.

Le choix des couples de matériaux, que forment, deux à deux, le premier et le troisième composant, et le deuxième et le troisième composant, permet de disposer, pour une géométrie identique, de caractéristiques de friction différentes, notamment si certains de ces composants comportent une surface de friction du fait de l'application d'un traitement de surface. Ceci permet de moduler l'effort résistant, utile en particulier pour s'opposer à un démontage involontaire. Le jonc 31, qui assure une reprise d'efforts notamment en cas de chocs, permet, encore, de préserver les surfaces des composants, ce qui est intéressant par exemple si au moins un des composants est en céramique, le jonc est alors avantageusement en métal au moins partiellement amorphe, « Liquidmetal ©» ou similaire.

L'invention est apte à de nombreuses applications en horlogerie, par exemple pour une valve hélium sur une montre de plongée, ou encore pour des composants d'habillage tels qu'un bracelet, une boucle, un fermoir, ou autre. Il en est de même en bijouterie, pour effectuer la fermeture de boutons de manchette, de boucles d'oreilles, ou encore pour fixer des pierreries ou des éléments décorés conçus de manière amovible.

L'invention concerne encore une pièce d'horlogerie, notamment une montre 1000, comportant un tel sous-ensemble d'habillage 100.

L'invention concerne encore un bijou comportant un tel sous-ensemble d'habillage 100.

L'invention permet, ainsi, de prévenir tout démontage inopiné et involontaire du sous-ensemble 100, par exemple sous l'effet de vibrations, de cycles de dilatation successifs, par une utilisation malencontreuse de l'utilisateur, ou autre.

Un avantage important de l'invention est de nécessiter que des usinages simples réalisables avec une certaine facilité, évitant ainsi toute salissure ou pollution de la montre, et autorisant un coût modéré.

L'invention permet d'assurer l'orientation parfaite d'un composant maintenu bloqué dans sa position de service.

L'invention autorise, encore, la mise en coopération de composants antagonistes réalisés en matières de différentes natures, sans contrainte de dilatation frottement, élasticité, ou autre, sans nécessiter d'élément de fixation extérieur tel que vis ou similaire, sans pas de vis ni usinage risquant de fragiliser des matières particulières telles que céramiques, saphir, et similaires. Elle présente une très bonne résistance à un dévissage accidentel ou même volontaire par vibration ou du type Chapuis-chocs. L'invention permet aussi d'assurer l'interchangeabilité des composants, et, par conséquent, une personnalisation accrue des montres ou bijoux des utilisateurs.

Cette invention est applicable aussi bien à des montres ou bijoux réalisés en matériaux précieux qu'à des réalisations de grande série comportant des composants de faible coût unitaire, notamment en matière plastique ou similaire.

L'invention se prête bien aux cas où le sous-ensemble 100 comporte des composants 1 et 10 réalisés dans des matériaux différents, avec des coefficients de dilatation différents, ou encore des matières fragiles, ou dures (céramique, saphir, pierres précieuses, gemmes, camées), qui n'autorisent pas des modes de fixation standard. Citons parmi des configurations classiques l'assemblage d'une carrure en or avec un fond saphir, ou encore une boîte entièrement en céramique, une combinaison métal-céramique, ou similaires. Les composants 1 et 10 peuvent ainsi être réalisés en toutes sortes de matériaux : alliages métalliques, notamment précieux ou titrés, aciers inoxydables, alliages métalliques au moins partiellement amorphe, ou « Liquidmetal© » ou similaire, céramiques, saphir, minéraux, pierres dures, caoutchouc, matières plastiques et notamment élastomères thermoplastiques dits TPE dont notamment polyuréthane thermoplastique dit TPU, polycarbonates dits PC, chlorures de polyvinyle dits PVC, polyacétals ou polyoxyméthylène dit POM, silicone, « Nylon® », pour ne citer, non limitativement, que des matériaux usuels en construction horlogère et en bijouterie-joaillerie.

## Revendications

1. Sous-ensemble d'habillage (100) pour pièce d'horlogerie ou pour montre ou pour bijou, comportant un premier composant (1) comportant des rebords (2) saillant d'une première jupe (6) alternés avec des premiers dégagements , et un deuxième composant (10) comportant des ailes (12) saillant d'une deuxième jupe (11) alternées avec des deuxièmes dégagements , agencé pour occuper une première position démontée d'insertion dans laquelle ledit premier composant (1) et ledit deuxième composant (10) ont l'un par rapport à l'autre une première orientation angulaire, ou pour occuper une deuxième position assemblée et verrouillée dans laquelle ledit premier composant (1) et ledit deuxième composant (10) ont l'un par rapport à l'autre une deuxième orientation angulaire différente de ladite première orientation angulaire et sont maintenus axialement par un ajustement à baïonnette entre au moins deux dits rebords (2) et au moins deux dites ailes (12), **caractérisé en ce que** ledit sous-ensemble (100) comporte au moins un troisième composant (30) en forme de bague, qui est intercalé entre ledit premier composant (1) et ledit deuxième composant (10) et comportant un jonc (31) logé dans une gorge (131) que comporte au moins ledit premier composant (1) ou ledit deuxième composant (10), et lequel troisième composant (30) comporte au moins un arrêt en rotation (33, 34) par rapport audit premier composant (1) ou deuxième composant (10), et au moins une zone élastique (32) creuse radialement, respectivement saillante radialement, agencée pour coopérer, dans un plan passant dans ladite gorge, en indexation angulaire et en blocage avec un ergot, respectivement un logement, que comporte celui desdits premier composant (1) et deuxième composant (10) qui est libre en rotation par rapport audit troisième composant (30).

2. Sous-ensemble d'habillage (100) selon la revendication 1, **caractérisé en ce que**, dans ladite première position démontée d'insertion, ledit premier composant (1) et ledit deuxième composant (10) ont l'un par rapport à l'autre une première orientation angulaire, et sont maintenus à distance l'un de l'autre par des moyens de répulsion, lesquels comportent des moyens de répulsion magnétique et/ou au moins un élément élastique et/ou au moins un joint d'étanchéité (9), et **en ce que**, dans ladite deuxième position assemblée et verrouillée ledit premier composant (1) et ledit deuxième composant (10) sont maintenus axialement à l'encontre d'un effort résistant exercé par lesdits moyens de répulsion.

3. Sous-ensemble d'habillage (100) selon la revendication 2, **caractérisé en ce que** lesdits moyens de répulsion comportent au moins un dit joint d'étanchéité (9).

4. Sous-ensemble d'habillage (100) selon la revendication 3, **caractérisé en ce que** lesdits moyens de répulsion comportent au moins un dit joint d'étanchéité (9), **en ce que** lesdits rebords (2) saillent radialement vers l'intérieur de ladite première jupe (6), lesdites ailes (12) saillent radialement vers l'extérieur de ladite deuxième jupe (11), **en ce que** ledit troisième composant (30) en forme de bague est agencé pour être intercalé radialement entre ledit premier composant (1) et ledit deuxième composant (10).

5. Sous-ensemble d'habillage (100) selon l'une des revendications 1 à 4, **caractérisé en ce que** ledit troisième composant (30) est fixe en rotation par rapport audit premier composant (1) ou audit deuxième composant (10), et **en ce que** ladite zone élastique (32) oppose un couple résistant de moment variable à tout couple tangentiel relatif entre ledit premier composant (1) et ledit deuxième composant (10), et tout passage d'un dit ergot ou logement sur une dite zone élastique (32) générant un couple résistant tendant à s'opposer au mouvement relatif de rotation entre ledit premier composant (1) et ledit deuxième composant (10), au moins une dite zone élastique (32) étant agencée pour l'indexage angulaire relatif entre ledit premier composant (1) et ledit deuxième composant (10).

6. Sous-ensemble d'habillage (100) selon l'une des revendications 1 à 5, **caractérisé en ce que** ledit ergot (132) est rapporté dans ladite gorge (131) qui est de révolution par rapport audit axe (D).

7. Sous-ensemble d'habillage (100) selon l'une des revendications 1 à 6, **caractérisé en ce que** ladite gorge (131) comporte directement ledit ergot (132), ou ledit logement dans la configuration inverse.

8. Sous-ensemble d'habillage (100) selon l'une des revendications 1 à 7, **caractérisé en ce que** ledit jonc (31) est élastique.

9. Sous-ensemble d'habillage (100) selon l'une des revendications 1 à 8, **caractérisé en ce que** ledit deuxième composant (10) comporte au moins un logement d'arrêt (133, 134) d'un pied constituant un dit arrêt en rotation (33, 34) que comporte ledit troisième composant (30).

10. Sous-ensemble d'habillage (100) selon la revendication 9, **caractérisé en ce que** ledit troisième composant (30) comporte deux dits arrêts en rotation (33, 34), agencés pour coopérer avec deux dits logements d'arrêt (133, 134) correspondants, dont l'écartement est différent de l'écartement à l'état libre entre lesdits arrêts en rotation (33, 34), de façon à imprimer une contrainte audit jonc (31) quand il est en position.

11. Sous-ensemble d'habillage (100) selon l'une des revendications 1 à 10, **caractérisé en ce que** le composant porteur de ladite gorge (131), et/ou ledit jonc (31) comporte une surface de friction agencée pour opposer un effort de friction résistant lors d'un démontage dudit sous-ensemble (100).

12. Sous-ensemble d'habillage (100) selon l'une des revendications 1 à 11, **caractérisé en ce que** ledit troisième composant (30) comporte, sur au moins une zone déformable, une pluralité de zones élastiques (32) agencées pour opposer une résistance successive à un dit relief complémentaire (18).

13. Sous-ensemble d'habillage (100) selon la revendication 12, **caractérisé en ce que**, dans une même dite zone déformable, lesdites zones élastiques (32) successives sont agencées pour opposer une résistance croissante à un dit relief complémentaire (18).

14. Sous-ensemble d'habillage (100) selon l'une des revendications 1 à 13, **caractérisé en ce que** ledit premier composant (1) est une carrure et ledit deuxième composant (10) est un fond.

15. Sous-ensemble d'habillage (100) selon l'une des revendications 1 à 13, **caractérisé en ce que** ledit premier composant (1) est une carrure et ledit deuxième composant (10) est un réhaut ou une lunette.

16. Sous-ensemble d'habillage (100) selon l'une des revendications 1 à 13, **caractérisé en ce que** ledit premier composant (1) est une carrure ou un tube rapporté sur une carrure, et ledit deuxième composant (10) est une couronne.

17. Sous-ensemble d'habillage (100) selon la revendication 2 et l'une des revendications 3 à 16, **caractérisé en ce que** ledit troisième composant (30) constitue lesdits moyens de répulsion.

18. Montre (1000) comportant un sous-ensemble d'habillage (100) selon l'une des revendications 1 à 17.

19. Bijou comportant un sous-ensemble d'habillage (100) selon l'une des revendications 1 à 17.

## Patentansprüche

1. Unterbaugruppe (100) für eine Uhr oder eine tragbare Uhr oder einen Schmuck, umfassend eine erste Komponente (1) mit Kanten (2), die von einer ersten Schürze (6) im Wechsel mit ersten Freischnitten vorstehen, und eine zweite Komponente (10) mit Flügeln (12), die von einer zweiten Schürze (11) abwechselnd mit zweiten Freischnitten vorstehen, angeordnet, um eine erste demontierte Einsetzposition einzunehmen, bei der die erste Komponente (1) und die zweite Komponente (10) relativ zueinander eine erste Winkelausrichtung aufweisen, oder eine zweite montierte und verriegelte Position einzunehmen, bei der die erste Komponente (1) und die zweite Komponente (10) relativ zueinander eine zweite Winkelausrichtung aufweisen, die von der ersten Winkelausrichtung verschieden ist, und axial durch eine Bajonetteinstellung zwischen mindestens zwei Kanten (2) und mindestens zwei Flügeln (12) gehalten werden, **dadurch gekennzeichnet, dass** die Baugruppe (100) mindestens eine dritte Komponente (30) in Form eines Rings umfasst, die zwischen die erste Komponente (1) und die zweite Komponente (10) eingebracht ist und einen Reif (31) umfasst, der in einer Nut (131) aufgenommen ist, die mindestens die erste Komponente (1) oder die zweite Komponente (10) umfasst, und die dritte Komponente (30) mindestens eine Drehsperre (33, 34) in Bezug auf die erste Komponente (1) oder die zweite Komponente (10) und mindestens eine radial vertiefte bzw. radial vorstehende elastische Zone (32) aufweist, die dafür ausgelegt ist, in einer durch die Nut verlaufenden Ebene mit einer Nase bzw. einer Aufnahme, die jene der ersten Komponente (1) und der zweiten Komponente (10) aufweist, die in Bezug auf die dritte Komponente (30) frei drehbar ist, winkelindexierend und blockierend zusammenzuwirken.

2. Unterbaugruppe (100) nach Anspruch 1, **dadurch gekennzeichnet, dass** in der ersten demontierten Einsetzposition die erste Komponente (1) und die zweite Komponente (10) relativ zueinander eine erste Winkelausrichtung aufweisen und auf Abstand voneinander gehalten werden durch Abstoßungsmittel, die magnetische Abstoßungsmittel und/oder mindestens ein elastisches Element und/oder mindestens eine Dichtung (9) umfassen, und dass in der zweiten montierten und verriegelten Position die erste Komponente (1) und die zweite Komponente (10) entgegen einer Widerstandskraft, die durch die Abstoßungsmittel ausgeübt wird, axial gehalten werden.

3. Unterbaugruppe (100) nach Anspruch 2, **dadurch gekennzeichnet, dass** die Abstoßungsmittel mindestens eine Dichtung (9) umfassen.

4. Unterbaugruppe (100) nach Anspruch 3, **dadurch gekennzeichnet, dass** die Abstoßungsmittel mindestens eine Dichtung (9) umfassen, dass die Kanten (2) radial einwärts zur ersten Schürze (6) vorstehen und die Flügel (12) radial auswärts zur zweiten Schürze (11) vorstehen und dass die dritte Komponente (30) in Form eines Rings so angeordnet ist, dass sie radial zwischen die erste Komponente (1) und die zweite Komponente (10) einbracht ist.

5. Unterbaugruppe (100) nach einem der Ansprüche 1 bis 4, **dadurch gekennzeichnet, dass** die dritte Komponente (30) in Bezug auf die erste Komponente (1) oder die zweite Komponente (10) drehfest ist und dass die elastische Zone (32) jedem relativen tangentialen Drehmoment zwischen der ersten Komponente (1) und der zweiten Komponente (10) ein Widerstandsdrehmoment mit variablem Moment entgegensetzt, und jeder Durchgang einer Nase oder einer Aufnahme an einer elastischen Zone (32) ein Widerstandsdrehmoment erzeugt, das bestrebt ist, der relativen Drehbewegung zwischen der ersten Komponente (1) und der zweiten Komponente (10) entgegenzuwirken, wobei mindestens eine elastische Zone (32) für die relative Winkelindexierung zwischen der ersten Komponente (1) und der zweiten Komponente (10) angeordnet ist.

6. Unterbaugruppe (100) nach einem der Ansprüche 1 bis 5, **dadurch gekennzeichnet, dass** die Nase (132) in die Nut (131), die in Bezug auf die Achse (D) rotationssymmetrisch ist, eingefügt ist.

7. Unterbaugruppe (100) nach einem der Ansprüche 1 bis 6, **dadurch gekennzeichnet, dass** die Nut (131) die Nase (132) oder in der umgekehrten Konfiguration die Aufnahme direkt aufweist.

8. Unterbaugruppe (100) nach einem der Ansprüche 1 bis 7, **dadurch gekennzeichnet, dass** der Reif (31) elastisch ist.

9. Unterbaugruppe (100) nach einem der Ansprüche 1 bis 8, **dadurch gekennzeichnet, dass** die zweite Komponente (10) mindestens eine Aufnahme (133, 134) für die Arretierung eines Fußes aufweist, der eine Drehsperre (33, 34) bildet, die die dritte Komponente (30) aufweist.

10. Unterbaugruppe (100) nach Anspruch 9, **dadurch gekennzeichnet, dass** die dritte Komponente (30) zwei Drehsperren (33, 34) aufweist, die so angeordnet sind, dass sie mit zwei entsprechenden Arretierungsaufnahmen (133, 134) zusammenwirken, deren Abstand von dem Abstand im freien Zustand zwischen den Drehsperren (33, 34) verschieden ist, derart, dass auf den Reif (31) eine Beanspruchung ausgeübt wird, wenn er in seiner Position ist.

11. Unterbaugruppe (100) nach einem der Ansprüche 1 bis 10, **dadurch gekennzeichnet, dass** die Komponente, die die Nut (131) trägt, und/oder der Reif (31) eine Reiboberfläche aufweisen, die dazu angeordnet ist, einer Widerstandsreibungskraft bei der Demontage der Unteranordnung (100) entgegenzuwirken.

12. Unterbaugruppe (100) nach einem der Ansprüche 1 bis 11, **dadurch gekennzeichnet, dass** die dritte Komponente (30) mindestens in einer verformbaren Zone mehrere elastische Zonen (32) aufweist, die dazu angeordnet sind, einem komplementären Relief (18) mit einem fortwährenden Widerstand entgegenzuwirken.

13. Unterbaugruppe (100) nach Anspruch 12, **dadurch gekennzeichnet, dass** in derselben verformbaren Zone die aufeinander folgenden elastischen Zonen (32) dazu angeordnet sind, einem komplementären Relief (18) mit einem zunehmenden Widerstand entgegenzuwirken.

14. Unterbaugruppe (100) nach einem der Ansprüche 1 bis 13, **dadurch gekennzeichnet, dass** die erste Komponente (1) ein Gehäusemittelteil ist und die zweite Komponente (10) ein Boden ist.

15. Unterbaugruppe (100) nach einem der Ansprüche 1 bis 13, **dadurch gekennzeichnet, dass** die erste Komponente (1) ein Gehäusemittelteil ist und die zweite Komponente (10) ein Höhenring oder eine Lünette ist.

16. Unterbaugruppe (100) nach einem der Ansprüche 1 bis 13, **dadurch gekennzeichnet, dass** die erste Komponente (1) ein Gehäusemittelteil oder ein an ein Gehäusemittelteil angefügtes Rohr ist und die zweite Komponente (10) eine Krone ist.

17. Unterbaugruppe (100) nach Anspruch 2 und einem der Ansprüche 3 bis 16, **dadurch gekennzeichnet, dass** die dritte Komponente (30) die Abstoßungsmittel bildet.

18. Tragbare Uhr (1000), umfassend eine Unterbaugruppe (100) nach einem der Ansprüche 1 bis 17.

19. Schmuckstück, umfassend eine Unterbaugruppe (100) nach einem der Ansprüche 1 bis 17.

## Claims

1. Exterior sub-assembly (100) for a timepiece, or for a watch, or for a piece of jewellery, comprising a first component (1) having rims (2) protruding from a first skirt (6) alternated with first recesses, and a second component (10) including wings (12) protruding from a second skirt (11) alternated with second recesses, arranged to occupy a first disassembled position of insertion in which said first component (1) and said second component (10) have a first angular orientation with respect to each other, or to occupy a second, assembled and locked position in which said first component (1) and said second component (10) have a second angular orientation with respect to each other, different from said first angular orientation, and are held axially in a bayonet fitting between at least two said rims (2) and at least two said wings (12), **characterized in that** said sub-assembly (10) comprises at least one third component (30) in the form of a ring, which is inserted between said first component (1) and said second component (10) and comprising a reed-like element (31) housed inside a groove (131) comprised in at least said first component (1) or said second component (10), and said third component (30) includes at least one rotational stop (33, 34), with respect to said first component (1) or second component (10), and at least one radially recessed or respectively radially protruding resilient area (32), arranged to cooperate, in a plane passing into said groove, in an angular indexing and locking arrangement with a lug or respectively a housing, comprised in whichever of said first component (1) and second component (10) is free to rotate with respect to said third component (30).

2. Exterior sub-assembly (100) according to claim 1, **characterized in that**, in said first disassembled position of insertion, said first component (1) and said second component (10) have a first angular orientation with respect to each other, and are kept at a distance from each other by repulsion means, which include magnetic repulsion means and/or at least one resilient element and/or at least one sealing gasket (9), and **in that**, in said second, assembled and locked position, said first component (1) and said second component (10) are held axially against a resistance force exerted by said repulsion means.

3. Exterior sub-assembly (100) according to claim 2, **characterized in that** said repulsion means comprise at least one said sealing gasket (9).

4. Exterior sub-assembly (100) according to claim 3, **characterized in that** said repulsion means comprise at least one said sealing gasket (9), **in that** said rims (2) protrude radially inwardly from said first skirt (6), said wings (12) protruding radially outwardly from said second skirt (11), and **in that** said third ring-shaped component (30) is arranged to be radially inserted between said first component (1) and said second component (10).

5. Exterior sub-assembly (100) according to any of claims 1 to 4, **characterized in that** said third component (30) is fixed in rotation with respect to said first component (1) or to said second component (10), and **in that** said resilient area (32) provides a resistance torque of variable moment against any relative tangential torque between said first component (1) and said second component (10), and any passage of a said lug or housing over a said resilient area (32) generating a resistance torque tending to resist the relative rotational movement between said first component (1) and said second component (10), at least one said resilient area (32) being arranged for the relative angular indexing between said first component (1) and said second component (10).

6. Exterior sub-assembly (100) according to any of claims 1 to 5, **characterized in that** said lug (132) is added inside said groove (131) which is a groove of revolution with respect to said axis (D).

7. Exterior sub-assembly (100) according to any of claims 1 to 6, **characterized in that** said groove (131) directly contains said lug (132), or said housing in the reverse configuration.

8. Exterior sub-assembly (100) according to any of claims 1 to 7, **characterized in that** said reed-like element (31) is resilient.

9. Exterior sub-assembly (100) according to any of claims 1 to 8, **characterized in that** said second component (10) includes at least one stop housing (133, 134) for a foot forming a said rotational stop (33, 34) comprised in said third component (30).

10. Exterior sub-assembly (100) according to claim 9, **characterized in that** said third component (30) comprises two said rotational stops (33, 34), arranged to cooperate with two corresponding said stop housings (133, 134), wherein the space therebetween is different from the space in the non-tensioned state between said rotational stops (33, 34), so as to impart a stress on said reed-like element (31) when it is in position.

11. Exterior sub-assembly (100) according to any of claims 1 to 10, **characterized in that** the component carrying said groove (131), and/or said reed-like element (31) comprises a friction surface arranged to resist a frictional resistance force upon disassembly of said sub-assembly (100).

12. Exterior sub-assembly (100) according to any of claims 1 to 11, **characterized in that** said third component (30) comprises, on at least one deformable area, a plurality of resilient areas (32) arranged to provide successive resistance against a said complementary relief (18).

13. Exterior sub-assembly (100) according to claim 12, **characterized in that**, in the same said deformable area, said successive resilient areas (32) are arranged to provide increasing resistance against a said complementary relief (18).

14. Exterior sub-assembly (100) according to any of claims 1 to 13, **characterized in that** said first component (1) is a case middle and said second component (10) is a case back.

15. Exterior sub-assembly (100) according to any of claims 1 to 13, **characterized in that** said first component (1) is a case middle and said second component (10) is a flange or a bezel.

16. Exterior sub-assembly (100) according to any of claims 1 to 13, **characterized in that** said first component (1) is a case middle or a tube added to a case middle, and said second component (10) is a crown.

17. Exterior sub-assembly (100) according to claim 2 and any of claims 3 to 16, **characterized in that** said third component (30) forms said repulsion means.

18. Watch (1000) including an exterior sub-assembly (100) according to any of claims 1 to 17.

19. Piece of jewellery comprising an exterior sub-assembly (100) according to any of claims 1 to 17.
